# EUROPEAN PATENT APPLICATION

(11) **EP 1 792 926 A2**
(43) Date of publication of application: **06.06.2007**
(21) Application number: 06024659.2
(22) Date of filing: 28.11.2006
(51) Int. Cl.: C08G 18/36, C08G 18/22, C08G 18/24

(54) **Bio-based insulating foam**

(30) Priority: 01.12.2005 US 291276
(71) Applicant: Niemann, Lance K., Prescott Valley AZ 86314 (US)
(72) Inventor: Niemann, Lance K., Prescott Valley AZ 86314 (US)
(74) Representative: Emde, Eric

(57) **Abstract**

There is disclosed a bio-based polyurethane foam useful as rigid insulation in which the reactant portion of the B side is composed of a transesterified and hydroxylated derivative of vegetable oil, preferably soy and or linseed oil; water and minor amounts of catalysts and surfactant. The vegetable oil is obtained by reacting the oil with a bio-based, multifunctional hydroxyl compound such as glycerol, sorbitol, or fructose. The A and B sides are admixed in weight proportions of 20 to 60 parts organic polyisocyanate (A side) and 80 to 40 parts polyol (B side) per 100 parts of finished insulation. Preferably a tin catalyst and an alkyl diethylene diamine cocatalyst are used to minimize cure time of the foam insulation.

## Description

### BACKGROUND OF THE INVENTION

### 1. Field of Invention

This invention relates to insulating compositions, and in particular to rigid foam compositions which contain a major proportion of bio-based components and have a volatile organic content (VOC) between zero and 3 percent, and to a method for preparation of such foam compositions.

### 2. Brief Statement of the Prior Art

The vast majority of rigid insulating foams currently marketed are based on petroleum derived components. Typical of these are polystyrene and polyurethane foams. Polyurethane insulating foams are widely used in various fields such in coolers, roofing panels, packaging, and structural members. Although polystyrene foam is used for some applications, the majority of rigid insulations are polyurethane foams prepared by mixing two reactive components, commonly referred to as the A and B sides, which, respectively, are an organic isocyanate and a reactive polyol. These are usually methylene diphenyl diisocyanate for the A side, and a polyether such as polypropylene glycol or a polyester polyol such as ethylene butylene adipate diol for the B side.

The urethane insulations currently in use are derived almost entirely from petroleum sources and are therefore subject to price fluctuation and availability of petroleum and natural gas which are dictated by the demands of the energy markets, the steadily dwindling gas and oil supplies and the volatility of international politics.

Bio-based sources such as soy oil, castor oil, palm oil, corn oil, linseed oil etc. have been suggested as substitutes for the polyols in the B side of the urethane reactants, particularly for manufacture of foam products, as they provide the promise of a relatively stable, renewable raw material source. Examples are U.S. Patent 6,624,244 which discloses the use of a mixture of blown soy oil and a multi functional polyol such as ethylene glycol to react with an isocyanate and a blowing agent to form a urethane foam; and U.S. Patent 6,649,667 which discloses the reaction of an isocyanate and a polyol containing a vegetable oil in a reaction-injection-molded (RIM) process to produce a closed cell polyurethane foam.

U.S. Patent 6,686,435 discloses the use of epoxidized soy oil to produce casting compounds for electrical applications. Insulating foam products are not formed and the method of this patent entails extensive use of pentane which contributes to an objectionable level of VOC in the product.

### OBJECTIVES OF THE INVENTION

It is an objective of this invention to provide an rigid insulation which is based, in part, on a renewable, vegetable source.

It is a further objective of this invention to provide an rigid insulation having the majority of its composition based on a renewable, vegetable source.

It is also an objective of this invention to provide an rigid insulation composition which can be formulated to various physical properties required for a selected application.

It is likewise an objective of this invention to provide a rigid or semi rigid insulation urethane composition which minimizes the quantity of the organic isocyanate reactant.

It is an additional objective of this invention to provide a rigid or semi rigid insulation urethane composition which maximizes the quantity of bio-based components.

It is also an objective of this invention to produce a foam insulation using components that have no or negligible amounts of volatile organic compounds.

It is also an objective of this of this invention to produce a rigid insulation that does not use traditional blowing agents such as chlorinated-fluorocarbons (CFCs), hydrochlorinated-flourocarbons (HCFCs), hydoflourinated-carbons (HFCs), or volatile organics such as n-pentane, cyclo-pentane, iso-butane etc.

It is also a major objective of this invention to exclude any significant amounts of low boiling petrochemicals which contribute volatile organic compounds to the atmosphere.

It is likewise a major objective of this invention to avoid the use of organic ingredients which "off-gas" from the foam product and lead to poor air quality and reduction in dimensional stability of the foam product.

It is another objective of this invention to provide a rigid urethane foam insulation having a high flame retardancy.

### BRIEF DESCRIPTION OF THE INVENTION

This invention comprises a two part polyurethane rigid insulation in which the reactant portion of the B side is composed of one or more derivatives of the vegetable oil, preferably soy and or linseed oil. Preferably the B side comprises from 40 to 90 weight percent of a bio-based polyol derived from vegetable oil, most preferably soy oil, by a transesterification reaction with a bio-based, multi-functional hydroxyl compound; **0.1 to 40** weight percent water and minor amounts of catalysts and surfactant. The A and B sides are admixed in weight proportions of 20 to 60 parts organic polyisocyanate (A side) and 80 to 40 parts polyol (B side) per 100 parts of polyurethane foam insulation. Preferably a tin catalyst and an alkyl diethylene diamine cocatalyst are used to minimize cure time of the foam insulation.

### DESCRIPTION OF PREFERRED EMBODIMENTS

The rigid insulation of this invention is formed by mixing the A and B sides (reactants). The A side reactant comprises an organic polyisocyanate such as commonly used as a reactant in polyurethane manufacture. Included as useful polyisocyanates are those based on monomers such as 4,4' diphenymethane diisocyanate; 2,4' diphenymethane diisocyanate; toluene diisocyanate, 2,4' toluene diisocyanate, etc. The preferred polyisocyanates are based on 4,4'-diphenymethane diisocyanate known as Mondur MR or Mondur 489 which have a NCO content of 31.5% and a viscosity from 150-700 at 25°C. and which are available from Bayer Corporation.

The B side reactant is essentially a vegetable oil derivative obtained by a transesterification and alcoholysis reaction. Various vegetable oils can be selected as the raw material source, including olive oil, corn oil, sunflower oil, safflower oil, castor oil, linseed oil, soybean oil, hempseed oil, etc. The preferred vegetable oils are soy oil and linseed oil because of their availability and high content oftriglycerides of unsaturated fatty acids such as linoleic, oleic and linolenic acids and lesser contents of triglycerides of saturated fatty acids such as palmitic and stearic acids.

Prior to the transesterification and alcoholysis reaction, it is preferred to refine the crude vegetable oil. During refinement, the crude oil is permitted to settle to separate gums and other insoluble and congeneric impurities such as color bodies and phospholipids The oil layer is removed from the settled residue and, most preferably, is treated with an alkali to remove free fatty acids which may be present, thereby obtaining a refined vegetable oil.

The reactive bio-based polyol is obtained with a transesterification and alcoholysis treatment. In this treatment, the refined vegetable oil is reacted with a polyhydroxyl compound at an elevated temperature and in the presence of a transesterification catalyst. The preferred polyhydroxyl compound is also bio-based and suitable examples include glycerol and sugars, such as monosaccharides, e.g., fructose, sorbitol, glucose, etc.

The triglycerides in the refined vegetable oil undergo transesterification and alcoholysis losing fatty acid groups and forming di- and mono-substituted hydroxyl glycerides. The polyhydroxyl compound forms fatty acid esters with the fatty acid groups released from the triglycerides of the refined vegetable oil, thus forming a highly reactive polyol mixture, comprising primary and secondary hydroxy-substituted, long chain, fatty acid esters.

The transesterification and alcoholysis reaction is conducted at temperatures from 350°F. to about 575° F., preferably from 450° F. to about 550° F., over a reaction time from 4 to about 10 hours in the presence of a transesterification catalyst such as dibutyltindilaurate, dibutyltindioxide, or lithium hydroxide, which accelerates the transesterfication. The catalyst is used in concentrations from 0.05 to .5 weight percent, preferably from 0.1 to 0.3 weight percent, with the higher concentrations being used when it is desired to drive the reaction to completion. The reaction conditions and selection of the polyhydroxyl compound can be varied as desired to prepare a reactive polyol, having a hydroxyl number from 90 to 300, depending on the degree of expansion and cure time desired in the final insulating bio-based foam composition. When the reaction is carried to completion, there will be an equilibrated mixture of mono- and disubstituted fatty acid esters of glycerol and the polyhydroxyl compound.

In some applications, it may be desirable to increase the proportion of primary hydroxyl groups in the polyol mixture. This can be accomplished in several ways. One approach which has been successful is to provide from 3 to about 12 weight percent of a resin support. Examples of resin supports include a copolymer of an alkyl styrene and a hydroxyl substituted alkyl acrylate or methacrylate, or the monomers of these copolymers can be included for an in-situ copolymerization during the transesterification and alcoholysis reaction. For example paramethylstyrene and 2-hydroxyethylmethacrylate and a polymerization catalyst can be added during the transesterification and alcoholysis reaction to form a polymer with primary hydroxyl groups in the polyol mixture. Polyols particularly useful in the polyurethane reaction to form insulating foams can have a hydroxyl number from 120 to 300, preferably from 150 to 300.

A preferred additive to increase the primary hydroxyl content of the poloyol mixture is a dimer fatty acid having from 2 to about 5 carbons, such as oxalic, malonic, succinic, glutaric, pimelic sebacic, maleic, tartaric, etc.; or the anhydrides of these fatty acids. This additive can be used at concentrations from 2 to about 15 weight percent, preferably from 4 to 10 weight percent, and is preferred over the resin support as its use doesn't lower the bio-base content of the foam.

For foam compositions having high insulating properties, a reactive bio-based polyol having a hydroxyl number in the high end of the range, e.g., from 190 to 270 is used. For higher density products used for structural purposes, such as those to produce the fillings for walls, roofs and other structural members a bio-based polyol having a hydroxyl number from 90 to about 190 is used.

Disaccharide and polysaccharide compounds are also useful sources of a polyhydroxyl compound, such as maltose, starch, and cellulose, as these compounds can be hydrolyzed to obtain a monosaccharide such as glucose, galactose, fructose, or mixtures thereof for use in the transesterification and alcoholysis reaction. The hydrolysis is conducted at elevated temperatures in the presence of an acid such as hydrochloric acid

Depending on the application, desired reaction rate and extent of expansion of the insulating foam, water can be added to the B side reactant in an amount from 0.1 to 40 weight percent, preferably from 2 to about 20 weight percent. When water is added, a surfactant, preferably a silicone surfactant is also added to the B side reactant to improve or stabilize the cell structure of the foamed adhesive. Examples of suitable surfactants are DC-198, DC-193 and Dabco DC 5555 from Air Products, which are silicone polyether surfactants. The surfactant is added in concentrations from 0.1 to about 5.0 weight percent, preferably from 0.5 to about 2.5 weight percent of the B side reactant.

The B side reactant can also contain various other additives, such as catalysts to reduce the cure time of the foam. Suitable catalysts include organic compounds of metals such as bismuth tin and zinc. Examples of these are: bismuth or zinc neodecanoate, dibutyltin dilaurate, dibutyltin diacetate, etc. Preferably organic tin compounds are used. Additional catalysts include tertiary amines, pentamethyl diethylene diamine, etc. These catalysts are used in concentrations from 0.05 to 0.5 weight percent, preferably from 0.1 to 0.3 weight percent of the B side reactant. Depending on the amount of flame resistance needed a flame retardant such as a halogenated aromatic diol, chlorinated paraffins or barium metaborate monohydrate may be used alone or in combination, at concentrations recommended by the supplier, generally from about 0.5 to 4.0 weight percent. Additives such as fillers, pigments and dyes can also be included to produce or enhance specific desired properties. An example of a useful, bio-based filler is particulate or ground cotton bolls, which can be used in concentrations from 1 to about 15 weight percent, preferably from 3 to about 10 weight percent, to enhance the compressive strength of the structural foam.

The A and B reactants of the adhesive are admixed together in proportions from 20 to about 60 weight parts of the A reactant to 80 to 40 weight parts of the B reactant. Preferably, the minimum amount of the diisocyanate (A side) is used, e.g., from about 20 to 40 weight parts A reactant with from about 80 to 60 weight parts B reactant. The admixed reactants have a bio-based content from 30 to 80 weight percent, as determined analytically by radio carbon isotope mass spectroscopy in accordance with ASTM D6866-04 and have a VOC no greater than 3 weight percent as determined by ASTM Method 24.

Depending on the application, the cure time of the insulating foam can be widely varied. In most applications, a rapid cure is desired and for these applications, a polyol with a high hydroxyl value, e.g., from 170 to 270 can be used. Also, the amount of the A reactant can be increased to obtain the fast cure times, e.g., the amount of the A reactant can be selected from 40 to 60 weight parts per 60 to 40 weight parts of the B reactant to reduce the cure time. Preferably, the reactant reactants and their relative proportions are selected to produce insulating foams at rates currently associated with traditional insulating urethane foams.

The insulating foams can be used to insulate a wide variety of products and to produce rigid structural foams used on roofs and structural pre-manufactured building components.

The A and B reactants can be supplied in bulk and stored in heated or non heated containers with or without agitation.

The invention will be described by the following examples:

### EXAMPLE 1

An alkali refined soy oil is combined with sorbitol in proportions of 85 weight parts of soy oil to 15 weight parts sorbitol and 0.11 weight parts of dibutyltindilaurate transesterification catalyst. The mixture is heated to 440° F. and held at that temperature, under an inert gas for 2 hours, then heated to 460° F. and held at that temperature for an additional 2 hours. The hydroxyl value of the polyol product is 202.

### EXAMPLE 2

An alkali refined soy oil is combined with fructose in proportions of 85 weight parts of soy oil to 15 weight parts fructose and 0.11 weight parts of dibutyltindilaurate transesterification catalyst. The mixture is heated to 400° F. and held at that temperature, under an inert gas for 2 hours. The reaction product has a hydroxyl value of 200.

### EXAMPLE 3

An alkali refined soy oil is combined with glycerol in proportions of 85 weight parts of soy oil to 15 dry weight parts of glycerol and 0.11 weight parts of dibutyltindilaurate transesterification catalyst. The mixture is heated to 470° F. and held at that temperature, under an inert gas for 2 hours. The reaction product has a hydroxyl value of 204.

### EXAMPLE 4

An amount of 345 weight parts of an alkali refined soy oil is admixed with 90 weight parts paramethylstyrene and 43 weight parts 2-hydroxyethylmethacrylate and 2.6 weight parts DTBPO polymerization initiator. The mixture was heated, with stirring and autoinitiation occurred at 280° F. with an exotherm which raised the temperature to 400° F. and held at that temperature by cooling for 90 minutes. The mixture was diluted with 430 parts of the alkali refined soy oil, 137 parts glycerol and 0.11 weight parts of dibutyltindilaurate and heated to and maintained at a temperature of 470° to 480° F. for 2 hours. The final product has a hydroxyl value of 212. The resin cross-linked support is 9 weigh percent of the product.

### EXAMPLE 5

An alkali refined soy oil is transesterified with glycerol following the procedure of Example 3. An amount of 85 weight parts of a dimer fatty acid is added and the mixture is heated to 480° F. and held at that temperature for 2 hours to obtain a product having an acid value of 7. The reaction product has a hydroxyl value of 170.

### EXAMPLE 6

A refined soy oil and a refined linseed oil of 200 and 145 parts respectively is admixed with 65 weight parts of styrene-2-HEA copolymer and 0.11 weight parts of DBTDO (dibutyltindioxide). The mixture was heated , with stirring and autoinitiation occurred at 290oF with an exotherm which raised the temperature to 410oF and held at that temperature for 90 minutes. The mixture was further diluted with 200 and 130 parts of refined soy and linseed oil respectively, 137 parts of glycerine and 0.11 weight parts of dibutytindilaurate and heated to 500oF for 2 hours. The final product has a hydroxyl value of 210. The resin cross-linked support is 8 percent and is observed to inhibit phase separation of the product.

### EXAMPLE 7

A rigid insulation is prepared from a bio-based B side reactant by reaction with an A side reactant in otherwise conventional polyurethane foam manufacture. The B side reactant comprises the following reactants:

| **Reactant** | Concentration (weight per 100 parts) |
|---|---|
| Reactive polyol¹ | 86.8 |
| Water | 8 |
| Polycat 5² | 1.5 |
| Tin Catalyst³ | 0.2 |
| Surfactant⁴ | 1.5 |
| Firemaster⁵ 20 | 2.0 |

| | |
|---|---|
| ¹ a glycerol transesterified alkali refined soy oil with a hydroxyl number = 220 ² pentamethyl diethylene diamine ³ dibutyltin dilaurate ⁴ silicone polyether ⁵ halogenated aromatic diol | |

This B side reactant was admixed with an A side reactant comprising a MDI (diphenylmethane diisocyanate) polyisocyanate (Mondur MR) in proportions of 36 parts Side A and 64 parts Side B and the mixture was applied to form a 2 inch thick insulating foam for use as an insulating panel for roofing structures. A facer was added to both sides of the panel to form a completed foam construction board. The reactants cured rapidly and formed a foam with excellent dimensional stability, compressive strength of 3 to 5 pounds, and water absorption less than 1 % and an R value of 3.9 to 5.5 per inch. The finished foam does not support a flame, and when an applied ignition source is removed, the foam will "snuff" out without melting or dripping. The B reactant has 88% bio-based content, and the reactant mixture has a VOC less than 1%.

### EXAMPLE 8

A rigid insulation is prepared from a bio-based B side reactant by reaction with an A side reactant in otherwise conventional polyurethane foam manufacture. The B side reactant comprised the following reactants:

| **Reactant** | Concentration (weight per 100 parts) |
|---|---|
| Reactive polyol¹ | 84.8 |
| Water | 10.0 |
| Polycat 5² | 1.5 |
| Tin Catalyst³ | 0.2 |
| Surfactant⁴ | 1.5 |
| Firemaster⁵ 20 | 2.0 |

| | |
|---|---|
| ¹ a resin supported, glycerol transesterified alkali refined soy oil/linseed oil combination with a hydroxyl number = 210. ² pentamethyl diethylene diamine ³ dibutyltin dilaurate ⁴ silicone polyether ⁵ halogenated aromatic diol | |

This B side reactant was admixed with an A side reactant comprising a MDI (diphenylmethane diisocyanate) polyisocyanate (Mondur MR) in proportions of 40 parts Side A and 60 parts Side B and the mixture was applied to form a 2 inch thick insulating foam for use as an insulating panel for roofing structures. A facer was added to both sides of the panel to form a completed foam construction board. The reactants cured rapidly and formed a foam with excellent dimensional stability, compressive strength of 3 to 5 pounds, and water absorption less than 1% and an R value of 3.9 to 5.5 per inch. The finished foam does not support a flame, and when an applied ignition source is removed, the foam will "snuff" out without melting or dripping. The B reactant has 86% bio-based content and shows improved chemical stability compared to using a single oil.

### EXAMPLE 9

An insulating structural panel is prepared from a bio-based B side reactant by reaction with an A side reactant in an otherwise conventional polyurethane foam manufacture. The B side reactant comprised the following:

| **Reactant** | Concentration (weight per 100 parts) |
|---|---|
| Reactive polyol¹ | 90.8 |
| Water | 4 |
| Polycat 5² | 0.5 |
| Tin Catalyst³ | 0.2 |
| Surfactant⁴ | 1.5 |
| Firemaster⁵ 20 | 2.0 |
| Dabco 33 LV⁶ | 1.0 |

| | |
|---|---|
| ¹ a resin supported, glycerol transesterified alkali refined soy oil/linseed oil combination with a hydroxyl number = 210. ² pentamethyl diethylene diamine ³ dibutyltin dilaurate ⁴ silicone polyether ⁵ halogenated aromatic diol ⁶ triethlenediamine | |

This B side reactant was admixed with an A side reactant comprising a MDI (diphenylmethane diisocyanate) polyisocyanate (Mondur MR) in proportions of 38 parts Side A and 62 parts Side B and the mixture was applied to form a 6 inch thick insulating foam for use as a structural insulating panel for roofing and sidewall building structures. A ¾ inch plywood supported by 2 inch thick wood members formed a mold that was used as a facer to both sides of the panel to form a completed structural foam construction member. The reactants cured rapidly and formed a foam with excellent dimensional stability, compressive strength of 20 to 30 pounds, and water absorption less than 1% and an R value of 3.7 to 4.5 per inch. The finished foam does not support a flame, and when an applied ignition source is removed, the foam will "snuff" out without melting or dripping. The B reactant has 86% bio-based content and shows improved chemical stability compared to using a single oil.

### EXAMPLE 10

Another insulating construction panel is prepared with enhanced compressive strength. This panel is prepared from a bio-based B side reactant by reaction with an A side reactant in an otherwise conventional polyurethane foam manufacture. For this purpose, the B side reactant contains a reinforcing filler. The B side reactant has the following reactants:

| **Reactant** | Concentration (weight per 100 parts) |
|---|---|
| Reactive polyol¹ | 86.8 |
| Water | 2.0 |
| Ground cotton bolls | 6.0 |
| Polycat 5² | 0.5 |
| Tin Catalyst³ | 0.2 |
| Surfactant⁴ | 1.5 |
| Firemaster⁵ 20 | 2.0 |
| Dabco 33 LV⁶ | 1.0 |

| | |
|---|---|
| ¹ a resin supported, glycerol transesterified alkali refined soy oil/linseed oil combination with a hydroxyl number = 210. ² pentamethyl diethylene diamine ³ dibutyltin dilaurate ⁴ silicone polyether ⁵ halogenated aromatic diol ⁶ triethlenediamine | |

The polyurethane foam is prepared using the A side reactant and the procedure described in the preceding example. The resulting polyurethane foam had excellent dimensional stability, compressive strength of 40 psi., and water absorption less than 1% and an R value of 2.8 to 3.75 per inch. The finished foam does not support a flame, and when an applied ignition source is removed, the foam will "snuff" out without melting or dripping. The B reactant used in the foam has a bio-base content of 84 percent.

The invention has been described with reference to the illustrated and presently preferred embodiment. It is not intended that the invention be unduly limited by this disclosure of the presently preferred embodiment. Instead, it is intended that the invention be defined, by the means and sets, and their obvious equivalents, set forth in the following claims:

## Claims

1. The method to prepare a rigid polyurethane foam which comprises the steps of:
a. reacting an A side reactant comprising a reactive organic diisocyanate; with a B side reactant comprising:
I. a transesterified hydroxylated vegetable oil having
a hydroxyl number from 90 to about 300 mg/g;
ii. an organic metal catalyst in an amount from 0.1 to 1.2 weight percent; and
iii. water in a concentration from 0.1 to 20 weight percent.

2. The method of claim 1 wherein the A side and B side reactants are reacted in weight proportions of 20 to 60 parts A reactant and 80 to 40 weight parts B reactant.

3. The method of claim 2 wherein the weight proportions of the A and B reactants are used in proportions to obtain a foam product having from 30 to 80 weight percent of bio-based reactants.

4. The method of claim 1 wherein the volatile organic content of the foam is less than 3.0 weight percent.

5. The method of claim 1 wherein said transesterified and hydroxylated vegetable oil is obtained by reacting a bio-based polyhydroxyl compound with a refined vegetable oil at transesterification conditions of an elevated temperature from 450° F. to about 550° F. in the presence of a transesterification catalyst.

6. The method of claim 1 wherein said bio-based polyhydroxyl compound is selected from the group consisting of: glycerol, monosaccharides, disaccharides, polysaccharides, and mixtures thereof.

7. The method of claim 6 wherein said bio-based polyhydroxyl compound is
selected from the group consisting of:
fructose,
sorbitol,
glucose, and
galactose.

8. The method of claim 1 wherein said bio-based polyhydroxyl is obtained by the hydrolysis of starch, or
by the hydrolysis of cellulose.

9. The method of claim 1 wherein said bio-based polyhydroxyl compound contains from 1 to about 15 weight percent of a filler, and
wherein said filler is preferably particulate cotton bolls.

10. A bio-based polyurethane rigid foam prepared by the method of claim 1 and having a bio-based content from 30 to 90 weight percent.

11. The foam of claim 13 having a volatile organic content less than 3 weight percent.
